# EUROPEAN PATENT APPLICATION

(11) **EP 2 607 996 A1**
(43) Date of publication of application: **26.06.2013**
(21) Application number: 12197172.5
(22) Date of filing: 14.12.2012
(51) Int. Cl.: G06F 3/039

(54) **Pad for a computer mouse and forearm of the computer mouse user**

(30) Priority: 19.12.2011 PL 39745711
(71) Applicant: Matuszak, Marek, 43-300 Bielsko-Biala (PL)
(72) Inventor: Matuszak, Marek, 43-300 Bielsko-Biala (PL)
(74) Representative: Holyst, Anna

(57) **Abstract**

A pad for a computer mouse and forearm of the computer mouse user which comprises a panel (1) and means for attaching the panel (1) to a desktop or tabletop. The panel (1) comprises a supported part (4) for resting and being attached on the desktop or tabletop (2) and for placing a computer mouse on it, and a free part (5) to be placed outside the desktop or tabletop (2) and to support the forearm of the user. The panel (1) has resilience such that the deflection angle (α) of the free part (5) of the panel (1) in relation to the plane of the supported part (4) attached to the desktop (2) under a pressing force greater than 0 and less than 30 N acting on the outer edge (8) of the panel (1) is greater than 0 and less than 30 degrees, so that the forearm of the user is supported in a resilient manner. The panel (1) is provided with a friction lining layer (11), disposed on the upper side (7) of the panel (1), at least on a fragment of the free part (5) of the panel (1).

## Description

### Technical field

The present invention relates to a pad for a computer mouse and forearm of the computer mouse user.

### Background art

Different types of pads for a computer mouse and forearm of the computer mouse user are known, because a very important issue in the use of a computer mouse is appropriate support of the user's forearm in a manner which ensures to avoid of painful wrist and forearm muscle tone. In particular, the appropriate forearm support is needed when on a desk or table, on which the hardware, such as a monitor, keyboard or computer is located, there is no enough space to operate a computer mouse and to support the forearm of the user. Then the user's forearm is simply suspended in the air without any support.

A support for a computer mouse and forearm of the computer mouse user designed to attach to a table or desk and supporting computer mouse, the mouse pad and user's forearm is known from the U.S. patent specification No. 5,876,002. The support comprises a supporting rectangular panel, which is provided with attached clamps for fixing the panel to a desktop or desk drawer.

Prior art solutions are characterized in that the user's forearm is rigidly supported by various types of supports. This makes the working position of the operator of the computer mouse uncomfortable.

### Summary of the invention

The aim of the invention is a pad for a computer mouse and forearm of the computer mouse user, which will enable appropriate support of the user's forearm in a manner that will make it possible to avoid a painful wrist and forearm muscle tone, and especially a pad which can be used when on a desk or table, where the hardware, such as a monitor, keyboard or computer is located, there is no enough space to operate a computer mouse and to support the forearm of the computer mouse user.

This aim was achieved with a pad for a computer mouse and forearm of the computer mouse user having the features specified in claim 1. Preferred and advantageous features of the present invention are defined in the dependent claims.

The pad for a computer mouse and forearm of the computer mouse user according to the invention ensures ergonomic handling of a computer mouse, as well as it allows to eliminate the common wrist disorders occurring in people working with a computer mouse. A pad according to the present invention takes up little space and can be used when on a desk or table where the hardware is located there is not enough space to operate a computer mouse and to support the forearm of the user. Moreover, the pad according to the invention has a simple construction and is cheap to manufacture.

### Brief description of the drawings

The embodiments of the object of the invention are shown in the drawing, in which fig. 1 shows in a top view a pad for a computer mouse and forearm of the computer mouse user according to the invention attached to a desktop or tabletop, fig. 2 shows schematically in a side view the deflection of the pad according to the invention attached to a desktop or tabletop, figs. 3a, 3b, 3c show three different shapes of the friction layer, located on the top side of the pad according to the invention, fig. 4 shows a perspective view of the pad according to the present invention attached to the desktop, fig. 5 shows in a view from below the pad of the invention, which illustrates the means for attaching the pad to the desktop, and fig. 6 shows by a dash line the deflection of the pad according to the present invention attached to a desktop, in a perspective view.

### Description of embodiments

The pad comprises a resilient panel 1 having elongated shape, which task is to support the user's forearm during use of the computer mouse and means for attaching the panel 1 to a desktop or tabletop 2. The panel 1, in its operating position, is attached to the desktop or tabletop 2, and computer mouse and forearm of the computer mouse user are located on the panel 1 while operating the computer.

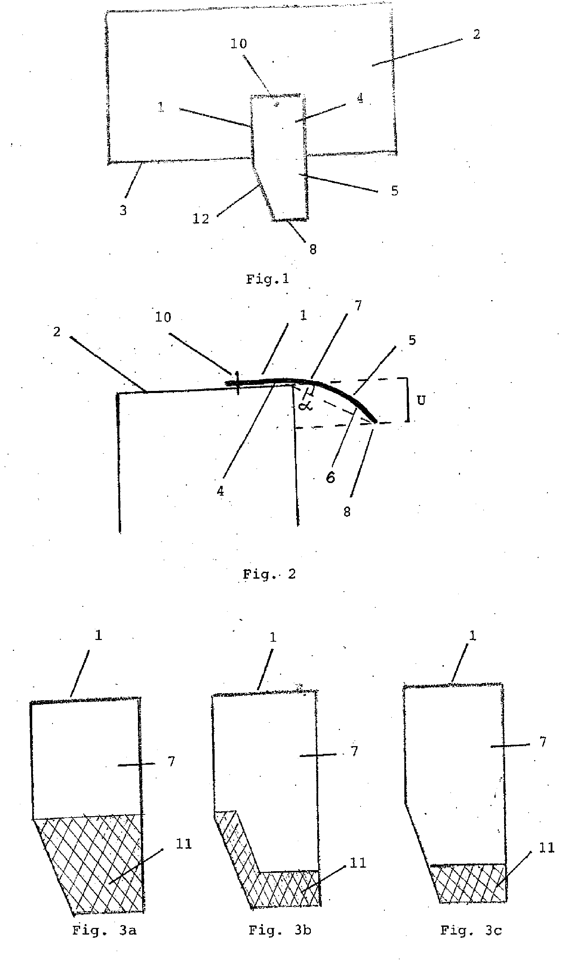

The panel 1, in its operating position, is attached to the desktop or tabletop 2 by means for attaching the panel 1, and it is supported substantially in a half of its length on the edge 3 of the desktop or tabletop 2 so that it comprises a supported part 4 resting on the desktop or tabletop 2, and a free part 5, projecting out of the desktop or tabletop 2, as shown in figs. 1, 2, 4 and 6. In operation, a computer mouse is located on the supported part 4 while a free part 5 supports the user's forearm.

The panel 1 has an underside 6, i.e. the side that in the pad attached to a desktop or tabletop is directed toward the desktop or tabletop 2, and the top side or upper side 7, which in the pad attached to a desktop or tabletop is directed toward the user. The panel 1 has a transverse outer edge 8 which in the pad attached to a desk or table is located furthest away from the edge 3 of the desktop or tabletop 2.

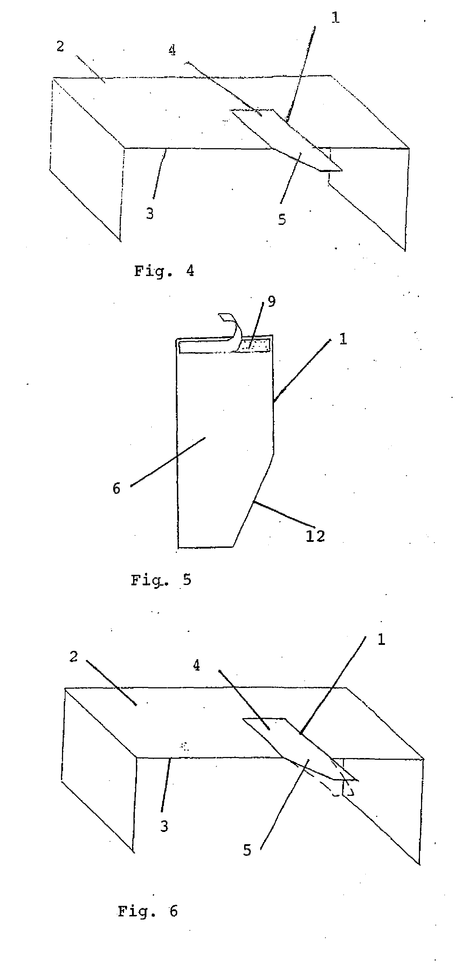

The panel 1, in its operating position, is attached to the desktop or tabletop 2 by means for attaching the panel, which are located on the supported part 4 of the panel 1, which may be, for example, adhesive tape or mounting tape 9 (fig. 5), placed on the underside 6 of the panel 1, or by a nut/screw assembly 10 (figs. 1 and 2), which ensures a free rotation of the panel 1 around a fixing point. The nut or screw is embedded in the desktop or tabletop 2, and the panel 1 comprises a hole through which the screw extends.

According to the present invention, the panel 1 is resilient and is deformed by a pressing force of the forearm rested on its surface (fig. 2). This deformation allows for any ergonomic adaptation of the position of the forearm of the working person. The panel 1 can be made, for example, of fibreboard having a thickness of 3 mm. Resilience of such panel allows its free deflection in such a way that the user's forearm rested on the panel 1 can freely deflect from a horizontal position in relation to the desktop or tabletop 2 by such angle which ensures optimal user's comfort, up to about 30 degrees. Thus, the deflection angle α of the free part 5 of the panel 1 in relation to the plane of the supported part 4 attached to the desktop 2 under a pressing force greater than 0 and less than 30 N acting on the outer edge 8 of the panel is greater than 0 and less than 30 degrees. Precisely, the deflection angle α, as shown in fig. 2, is the angle between a plane being an extension of the plane of the desktop or tabletop 2, and a plane passing through the edge 3 of the desktop 2 and the outer edge 8 of the panel 1.

The table below shows the displacement U of the transverse outer edge 8 of the panel 1 in relation to the plane which is an extension of the plane of the desktop or tabletop 2 and the deflection angle α of the free part 5 of the panel 1 corresponding to that displacement under forces in the range of 3 to 33 N acting on the outer edge 8 of the panel 1. The table shows the results for a pad made of fibreboard having a thickness of 3 mm, a length of 41 cm and a width of 18.5 cm, in which the length of the supported part 4 was 19 cm, 21 cm and 23 cm, respectively.

| | **The length of supported part 4** | | | | | | | |
|---|---|---|---|---|---|---|---|---|
| | **19cm** | | | **21 cm** | | | **23cm** | |
| **F [N]** | **U [mm]** | **angle α ^{[0]}** | | **U [mm]** | **angle α ^{[0]}** | | **U [mm]** | **angle α ^{[0]}** |
| 3 | 11 | 2.8 | | 10 | 2.8 | | 8 | 2.5 |
| 5 | 21 | 5.5 | | 14 | 4.1 | | 14 | 4.4 |
| 7 | 31 | 8 | | 22 | 6.2 | | 21 | 6.6 |
| 9 | 40 | 10 | | 30 | 8.5 | | 27 | 8.5 |
| 11 | 49 | 12.5 | | 39 | 11.1 | | 34 | 10.7 |
| 13 | 57 | 14.5 | | 45 | 12.7 | | 40 | 12.5 |
| 15 | 66 | 16.7 | | 52 | 14.6 | | 46 | 14.3 |
| 17 | 72 | 18 | | 60 | 16.7 | | 52 | 16.1 |
| 19 | 80 | 20 | | 67 | 18.5 | | 57 | 17.6 |
| 21 | 87 | 21.6 | | 74 | 20.3 | | 62 | 19.1 |
| 23 | 96 | 23.6 | | 78 | 21.3 | | 67 | 20.4 |
| 25 | 103 | 25 | | 82 | 22.3 | | 72 | 21.8 |
| 27 | 108 | 26 | | 88 | 23.7 | | 76 | 22.9 |
| 29 | 114 | 27.4 | | 94 | 25.2 | | 80 | 23.9 |
| 31 | 118 | 28.2 | | 97 | 25.9 | | 85 | 25.3 |
| 33 | 124 | 29.4 | | 103 | 27.2 | | 89 | 26.3 |

The panel 1 comprises a layer of a friction lining 11. The friction layer 11 is a soft lining having selected coefficient of friction, said lining is placed on the top side 7 of the panel 1 in the zone on which the forearm is rested. The material for the friction layer may be, for example, a porous material made of plastic. The friction layer 11 covers the entire surface of the panel or only a portion of the panel surface, as shown in figs. 3a, 3b and 3c. A suitable frictional feature of the lining should ensure that the forearm cannot freely move across the panel in an automatic manner. Thanks to that the forearm will not have to be supported by the intentional action of muscles, which causes feeling of fatigue and pain of entire forearm. Thus the task of the friction layer 11 is achieving of the frictional feature between the forearm and the panel 1 and to provide comfort to the forearm.

The panel 1 is bevelled in the free part 5, wherein the bevel 12 in the panel 1 attached to the desktop or tabletop 2 is arranged at the user side. Preferably, the bevel 12 starts from the half of the length of panel 1. Such bevel allows saving material and ensures an ergonomic shape of the pad.

The pad is not limited to the rectangular shape with bevelled corner shown in figures and may have any suitable elongated shape, for example oval, as well as it may have the dimensions matched to the anatomical characteristics of the person using the pad while assuring that the deflection angle α of the free part 5 of the panel 1 in relation to the plane of the supported part 4 attached to the surface of the desktop 2 under a pressure force greater than 0 and less than 30 N acting on the outer edge 8 of the panel 1 is greater than 0 and less than 30°.

## Claims

1. A pad for a computer mouse and forearm of the computer mouse user which comprises a panel and means for attaching the panel to a desktop or tabletop, wherein the panel (1) comprises a supported part (4) for resting and being attached on the desktop or tabletop (2) and for placing the computer mouse on it, and a free part (5) to be placed outside the desktop or tabletop (2) and to support the forearm of the user, **characterized in that** the panel (1) has resilience such that the deflection angle (α) of the free part (5) of the panel (1) in relation to the plane of the supported part (4) attached to the desktop or tabletop (2) under a pressing force greater than 0 and less than 30 N acting on the outer edge (8) of the panel (1) is greater than 0 and less than 30°, so that the forearm of the user is supported in a resilient manner.

2. The pad according to claim 1, **characterized in that** the length of the supported part (4) of the panel (1) is substantially equal to the length of the free part (5) of the panel (1).

3. The pad according to claims 1 or 2, **characterized in that** the means for attaching the panel (1) to the desktop or tabletop (2) is a mounting tape or adhesive tape (9) arranged on the underside (6) of the panel (1) on the supported part (4).

4. The pad according to claims 1 or 2, **characterized in that** the means for attaching the panel (1) to the desktop or tabletop (2) is means for rotational attaching of the panel (1) to the desktop (2), preferably a nut/screw assembly (10).

5. The pad according to any one of the preceding claims, **characterized in that** the panel (1) is provided with a friction lining layer (11), disposed on the upper side (7) of the panel (1), at least on a fragment of the free part (5) of the panel (1).

6. The pad according to any one of the preceding claims, **characterized in that** the panel (1) is an elongated rectangle and it is bevelled in the free part (5), wherein the bevel (12) in the panel (1) attached to the desktop or tabletop (2) is on the user side.

7. The pad according to claim 6, **characterized in that** the bevel (12) starts in the half of the length of the panel (1).

8. The pad according to any one of the preceding claims, **characterized in that** the panel (1) is made of fibreboard.

9. The pad according to claim 8, **characterized in that** the panel (1) is made of a fibreboard having a thickness of 3 mm.
